# FASCICULE DE BREVET EUROPEEN

(11) **EP 4 616 692 B1**
(45) Date de publication et mention de la délivrance du brevet: **04.11.2026**
(21) Numéro de dépôt: 25161333.7
(22) Date de dépôt: 03.03.2025
(51) Int. Cl.: A01C 7/04

(54) **ENSEMBLE DE DISTRIBUTION POUR UN SEMOIR ET PROCÉDÉ DE VIDANGE ASSOCIÉ**
VEREINZELUNGSEINHEIT FÜR EINE SÄMASCHINE UND ZUGEHÖRIGES ENTLEERUNGSVERFAHREN
METERING UNIT FOR A SEED DRILL AND ASSOCIATED METHOD FOR EMPTYING IT

(30) Priorité: 15.03.2024 FR 2402626
(43) Date de publication de la demande: 17.09.2025
(73) Titulaire: Kuhn SAS, 67700 Saverne (FR)
(72) Inventeur: CONSTANT, Olivier, 67340 WEITERSWILLER (FR)

(56) Documents cités:
- EP-A1- 3 610 714
- AT-A4- 506 803
- DE-A1- 3 602 125
- FR-A1- 2 323 308

## Description

La présente invention concerne le domaine des ensembles de distribution pour un semoir et le domaine des procédés de vidange.

L'invention concerne ainsi plus généralement le domaine du semis monograine qui est aussi appelé semis de précision, c'est-à-dire le semis en rangs de graines une par une. Le semis monograine trouve son application dans les cultures du maïs, de la betterave, du soja ou similaire.

Un semoir monograine se présente généralement sous la forme d'un châssis-poutre sur lequel viennent se fixer des éléments semeurs qui le plus souvent sont compris entre 4 et 12, voire plus, grâce à un parallélogramme. L'espacement entre ces éléments semeurs varie selon les cultures, de préférence entre 37,5 centimètres et 80 centimètres, mais permet de former des rangs bien distincts. Pour cette raison, il est commun dans ce cas de parler de cultures en rangs, par opposition aux cultures comme le blé où l'espacement est beaucoup plus faible.

De manière connue, un ensemble de distribution pour un semoir monograine fonctionne globalement de la manière énoncée ci-après.

Un boîtier étanche en deux parties comporte un disque de distribution perforé entrainé en rotation de préférence par un moteur qui forme un organe de distribution d'une pluralité d'éléments granulaires. Le disque de distribution sépare le boîtier en deux chambres dans lesquelles les pressions d'air sont différentes, une différence de pression qui peut être positive ou négative est donc créée de part et d'autre du disque de distribution perforé. Le boîtier est relié à une soufflerie qui permet de gérer la différence de pression selon le type de graine, la vitesse d'avance, et d'autres paramètres.

En bas du disque de distribution perforé, c'est-à-dire au fond du boîtier se trouve une zone de réserve d'éléments granulaires, par exemple des graines, qui est le plus souvent approvisionnée par une trémie. Ces graines sont en contact avec le disque de distribution perforé en rotation, qui, au fur et à mesure de sa rotation, va entrainer les graines une par une dans ses perforations.

Le diamètre et la forme des perforations du disque de distribution sont faits de manière à pouvoir accueillir un seul élément granulaire par exemple une graine, le maintien de l'élément granulaire dans la perforation se fait grâce à la différence de pression entre les deux côtés du disque de distribution. Les perforations sont souvent bordées de formes spéciales qui sont par exemple en relief et/ou en creux et sont aménagées dans le disque de distribution de sorte à guider et/ou orienter les graines vers la perforation. Ces zones autour des perforations sont appelées communément agitateurs.

Une fois les graines distribuées dans les perforations du disque de distribution, un système dit de sélection permet d'éliminer les graines qui sont en trop pour éviter les doubles, car il peut arriver que plusieurs graines viennent se loger dans une seule perforation ce qui n'est pas souhaitable. La sélection peut se faire grâce à des dents, des brosses, ou similaires qui sont montées fixes et sont situées à l'extérieur et/ou à l'intérieur du parcours des graines. Il en résulte que les graines excédentaires retombent dans la zone de réserve.

Une fois les graines sélectionnées, elles sont transportées vers la dernière zone de la distribution qui est généralement située dans le dernier quart de tour du disque de distribution, où la différence de pression n'est plus présente. Il résulte de cette absence de différence de pression que la graine sort de la perforation et sort de la distribution vers le sol. L'éjection de la graine peut être assistée par une roulette qui permet de couper la différence de pression et éventuellement de pousser la graine en dehors de la perforation à l'aide de picots.

Après l'utilisation du semoir, il est courant qu'un reste d'éléments granulaires soit présent dans la zone de réserve. L'ensemble de distribution peut dans certaines conditions nécessiter une vidange des éléments granulaires encore présents dans la zone de réserve après utilisation du semoir. Cette situation peut se présenter par exemple, lorsque la porte du boîtier étanche doit être ouverte pour changer le disque de distribution et/ou pour réaliser une opération de nettoyage et/ou de maintenance.

Habituellement, lors de l'ouverture de la porte et/ou lorsqu'on enlève le disque selon s'il est dans la porte ou non alors le restant d'éléments granulaires tombera au sol en dehors de l'ensemble de distribution.

Il en résulte de multiples problèmes, à savoir que les graines au sol sont à ramasser et/ou sont gâchées ce qui est peu pratique et salissant.

Pour éviter les problèmes précités et faciliter la vidange, l'on connaît déjà des goulottes de vidange inclinées vers le sol mais elles permettent uniquement de déverser le restant de graines dans un contenant tel qu'un seau, sac ou similaire. Ce type de goulottes de vidange n'est donc pas optimale pour le cas où l'opérateur ne disposerait pas d'un contenant à portée de main et car celui-ci doit être en mesure de le placer à la bonne position avant d'ouvrir la porte.

La vidange peut se faire avec la porte ouverte ou fermée si l'ensemble de distribution dispose d'une trappe inférieure de vidange au niveau de sa sortie.

Les goulottes de vidange existantes sont généralement des pièces rapportées qui viennent se fixer sur la distribution quand on en a besoin.

Le document EP3610714A1 décrit déjà une goulotte de vidange telle que décrite précédemment. Notamment, la goulotte de vidange peut être montée des deux côtés de la distribution ce qui permet une vidange de la distribution par les deux côtés.

La présente invention a pour but de pallier au moins l'un de ces inconvénients précités et vise à fournir une solution permettant une meilleure préparation de l'opération de vidange pour améliorer la vidange.

A cet effet, l'invention concerne un ensemble de distribution pour un semoir comprenant au moins :
- un boîtier étanche comprenant au moins une partie fixe et une porte mobile entre une position d'ouverture et une position de fermeture,
- un organe de distribution d'une pluralité d'éléments granulaires agencé pour distribuer de façon discrète et singulière une pluralité d'éléments granulaires,
l'organe de distribution étant disposé à l'intérieur du boîtier pour séparer l'intérieur du boîtier en une première chambre et une deuxième chambre, lesquelles sont distinctes, la première chambre étant configurée pour recevoir tout ou partie de la pluralité d'éléments granulaires au moins dans une zone de réserve et la deuxième chambre étant fermée par la porte dans sa position de fermeture et étant ouverte par la porte dans sa position d'ouverture,
- une goulotte de vidange montée sur l'extérieur de la partie fixe du boîtier, de préférence du côté de la deuxième chambre, par au moins un élément de montage,
l'ensemble de distribution est caractérisé en ce que la goulotte de vidange est configurée pour être positionnable dans une position de vidange intermédiaire, dans laquelle la goulotte de vidange est configurée pour permettre l'écoulement de tout ou partie de la pluralité d'éléments granulaires initialement présent dans la zone de réserve vers une zone tampon de la goulotte de vidange et pour permettre le stockage de ces éléments granulaires dans la zone tampon sans que ces derniers ne s'écoulent directement hors de la goulotte de vidange, la zone tampon présentant une hauteur tampon inférieure à la hauteur de réserve.

L'invention concerne également un élément semeur comprenant au moins une trémie agencée pour contenir une pluralité d'éléments granulaires et étant reliée par des moyens de conduction audit ensemble de distribution, caractérisé en ce que l'ensemble de distribution est selon l'invention.

L'invention concerne également un semoir comprenant au moins un châssis sur lequel est monté au moins un élément semeur, caractérisé en ce que le au moins un élément semeur est selon l'invention.

L'invention concerne également un procédé de vidange d'un ensemble de distribution pour un semoir comprenant une pluralité d'éléments granulaires au moins dans la zone de réserve, caractérisé en ce que l'ensemble de distribution est selon l'invention et en ce que le procédé comprend au moins :

- une étape de préparation à la vidange, lors de laquelle la goulotte de vidange est positionnée dans une position de vidange intermédiaire, dans laquelle la goulotte de vidange permet l'écoulement de tout ou partie de la pluralité d'éléments granulaires initialement présent dans la zone de réserve vers la zone tampon de la goulotte de vidange et permettre le stockage de ces éléments granulaires dans la zone tampon sans que ces derniers ne s'écoulent directement hors de la goulotte de vidange, la zone tampon présentant une hauteur tampon inférieure à la hauteur de réserve.

L'invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
[Fig. 1] la figure 1 représente une vue en perspective d'un ensemble de distribution comprenant une goulotte de vidange dans une position de vidange intermédiaire selon l'invention,
[Fig. 2] la figure 2 représente une vue de côté de l'ensemble de distribution de la figure 1,
[Fig. 3] la figure 3 représente une vue en perspective d'un ensemble de distribution comprenant la goulotte de vidange dans une position d'écoulement selon une variante de l'invention,
[Fig. 4] la figure 4 représente une vue de côté de l'ensemble de distribution de la figure 3,
[Fig. 5] la figure 5 représente une vue en perspective de l'ensemble de distribution comprenant la goulotte de vidange dans une position repliée selon une variante de l'invention,
[Fig. 6] la figure 6 représente une vue en perspective d'un ensemble de distribution dépourvu de la goulotte de vidange,
[Fig. 7] la figure 7 représente une vue en perspective de la goulotte de vidange illustrée dans les figures 1 à 5 selon l'invention,
[Fig. 8] la figure 8 représente une vue en perspective et de dessous de la goulotte de vidange illustrée à la figure 7,
[Fig. 9] la figure 9 représente une vue de côté de la goulotte de vidange illustrée à la figure 7, et
[Fig. 10] la figure 10 représente une vue de dessous de la goulotte de vidange illustrée à la figure 7.

Un ensemble de distribution pour un semoir comprend au moins :
- un boîtier 1 étanche comprenant au moins une partie fixe 2 et une porte 3 mobile entre une position d'ouverture et une position de fermeture,
- un organe de distribution d'une pluralité d'éléments granulaires agencé pour distribuer de façon discrète et singulière une pluralité d'éléments granulaires,
l'organe de distribution étant disposé à l'intérieur du boîtier 1 pour séparer l'intérieur du boîtier 1 en une première chambre 5 et une deuxième chambre, lesquelles sont distinctes, la première chambre 5 étant configurée pour recevoir tout ou partie de la pluralité d'éléments granulaires au moins dans une zone de réserve 7 et la deuxième chambre étant fermée par la porte 3 dans sa position de fermeture et étant ouverte par la porte 3 dans sa position d'ouverture,
- une goulotte de vidange 8 montée sur l'extérieur de la partie fixe 2 du boîtier 1, de préférence du côté de la deuxième chambre, par au moins un élément de montage 9.

Conformément à l'invention, l'ensemble de distribution est caractérisé en ce que la goulotte de vidange 8 est configurée pour être positionnable dans une position de vidange intermédiaire P1, dans laquelle la goulotte de vidange 8 est configurée pour permettre l'écoulement de tout ou partie de la pluralité d'éléments granulaires initialement présent dans la zone de réserve 7 vers une zone tampon 10 de la goulotte de vidange 8 et pour permettre le stockage de ces éléments granulaires dans la zone tampon 10 sans que ces derniers ne s'écoulent directement hors de la goulotte de vidange 8, la zone tampon 10 présentant une hauteur tampon inférieure à la hauteur de réserve.

Avantageusement, dans la position de vidange intermédiaire P1 de la goulotte de vidange 8 celle-ci se trouve dans une position dans laquelle la zone tampon 10 est conçue pour que s'écoule le restant d'éléments granulaires par exemple des graines provenant de la zone de réserve 7, sans qu'il ne s'écoule directement hors de la goulotte de vidange 8 et donc vers le bas et potentiellement au sol. Dans cette position de vidange intermédiaire P1, l'opérateur est par exemple en mesure d'effectuer des préparatifs avant l'opération de vidange tels que de placer un contenant à proximité ou à la bonne position avant de positionner la goulotte de vidange 8 dans une position d'écoulement P2 comme décrite ci-après. Cette configuration permet de préparer la vidange pour que celle-ci puisse ensuite intervenir dans les meilleures conditions.

De préférence, au moins dans la position de vidange intermédiaire P1 la goulotte de vidange 8 est montée amovible de la partie fixe 2 du boîtier 1 par le au moins un élément de montage 9 de préférence manœuvrable à une seule main de sorte à être détachable de la partie fixe 2 du boîtier 1.

Avantageusement, dans cette configuration il est possible de détacher la goulotte de vidange 8 du boîtier 1, puis de déverser le contenu de la goulotte de vidange 8 dans la trémie ou dans un autre contenant. La mise à disposition d'un contenant pour la vidange n'est donc pas rendue nécessaire dans ce cas. En outre, il n'est donc pas non plus nécessaire dans cette configuration de passer dans la position d'écoulement P2 décrite ci-après pour réaliser l'opération de vidange.

De préférence, la goulotte de vidange 8 est positionnable dans une position d'écoulement P2, configurée pour permettre l'écoulement, vers une zone de décharge 11 de hauteur de décharge inférieure relativement à la hauteur tampon, de tout ou partie de la pluralité d'éléments granulaires initialement présent dans la zone de réserve 7 ou la zone tampon 10, la zone de décharge 11 étant située hors de la goulotte de vidange 8.

Avantageusement, dans cette position, la goulotte de vidange 8 permet l'écoulement des éléments granulaires initialement contenus dans la zone de réserve 7 ou la zone tampon 10 vers la zone de décharge 11 située en contrebas. Un contenant peut être disposé au niveau de la zone de décharge 11 pour recueillir lesdits éléments granulaires.

Préférentiellement, dans la position de vidange intermédiaire P1 la goulotte de vidange 8 est horizontale ou inclinée d'un angle d'inclinaison dit intermédiaire empêchant l'écoulement d'élément(s) granulaire(s) hors de la goulotte de vidange 8.

De préférence, dans la position d'écoulement P2 la goulotte de vidange 8 est inclinée d'un angle d'inclinaison dit d'écoulement permettant l'écoulement d'élément(s) granulaire(s) qui est supérieur à l'angle d'inclinaison dit intermédiaire.

Avantageusement, en fonction de la valeur de l'angle d'inclinaison la goulotte de vidange 8 est soit dans la position de vidange intermédiaire P1 soit dans la position d'écoulement P2. Dans la position d'écoulement P2 l'angle d'inclinaison d'écoulement est plus grand que l'angle d'inclinaison dit intermédiaire dans la position de vidange intermédiaire P1 puisqu'une inclinaison suffisante est nécessaire pour former un plan incliné qui permette aux éléments granulaires de glisser dans la goulotte de vidange 8 vers la zone de décharge 11 située en contrebas.

De préférence, la goulotte de vidange 8 comprend une première partie 12 et une deuxième partie 14 comprenant une deuxième extrémité 15 libre de la goulotte de vidange 8, la deuxième partie 14 présente une géométrie agencée pour empêcher l'écoulement en dehors de la goulotte de vidange 8 dans la position de vidange intermédiaire P1.

Grâce à cette configuration, les éléments granulaires restent dans la goulotte de vidange 8 dans la zone tampon 10 dans la position de vidange intermédiaire P1.

De préférence, le fond 16 de la première partie 12 de la goulotte de vidange 8 est plat et le fond 16' de la deuxième partie 14 est incliné vers le haut relativement au fond 16 de la première partie 12.

Avantageusement, dans la position de vidange intermédiaire P1, les éléments granulaires sont empêchés de glisser en contrebas du fait de l'existence dans la deuxième partie 14 du plan incliné vers le haut. Cette configuration permet aussi d'éviter le débordement dans le cas d'un remplissage maximal.

De préférence, la première extrémité 13 de la goulotte de vidange 8 est configurée pour être montée sur la partie fixe 2 du boîtier 1 par le au moins un élément de montage 9 de préférence manœuvrable à une seule main.

Avantageusement, la goulotte de vidange 8 peut être montée ou démontée de la partie fixe 2 par l'élément de montage 9. Ainsi la goulotte de vidange 8 est complétement démontable et peut être désolidarisée soit après une vidange dans la position de vidange intermédiaire P1, soit en vue de son stockage. Dans le premier cas, il est possible de prendre la goulotte de vidange 8 par exemple à la main et de vider son contenu à l'endroit désiré. Dans le second cas, la goulotte de vidange 8 est démontée et entreposée hors de l'ensemble de distribution lorsqu'elle n'est pas utilisée. Il est par exemple possible de la fixer sur un autre composant de l'élément semeur, tel que sur une des parois de la trémie, à l'intérieur de couvercle de la trémie ou encore sur le châssis de l'élément semeur.

Si l'élément de montage 9 est manœuvrable à une seule main, alors il en résulte une meilleure ergonomie, puisque l'opérateur peut utiliser une main pour décrocher la goulotte de vidange 8 et l'autre main pour tenir un contenant ou ouvrir la trémie pour y déverser les éléments granulaires.

De préférence, la deuxième partie 14 présente une section transversale se rétrécissant en direction de la deuxième extrémité 15.

Avantageusement, la deuxième partie 14 se resserre en direction de la deuxième extrémité 15 libre pour faciliter le guidage et l'écoulement des éléments granulaires vers la zone de décharge 11 et vers un éventuel contenant tel qu'un sac ou un seau situé dans cette zone de décharge 11.

Préférentiellement, la goulotte de vidange 8 est positionnable, dans une position repliée P3, dans laquelle celle-ci est configurée pour être disposée repliée contre la porte 3 dans sa position de fermeture.

Avantageusement, dans cette configuration alternative au démontage, la goulotte de vidange 8 est rabattue contre la porte 3 mobile lorsqu'elle n'est pas utilisée. On évite ainsi d'avoir à démonter la goulotte de vidange 8 pour permettre son stockage. La goulotte de vidange 8 est stockée sur l'ensemble de distribution.

Préférentiellement, la goulotte de vidange 8 est montée mobile de préférence en rotation par le au moins un élément de montage 9 de préférence manœuvrable à une seule main pour être positionnable dans la position de vidange intermédiaire P1, dans la position d'écoulement P2 et entre lesdites positions sans nécessiter de détacher la goulotte de vidange 8 de la partie fixe 2 du boîtier 1.

De préférence, la goulotte de vidange 8 est montée mobile de préférence en rotation par le au moins un élément de montage 9 de préférence manœuvrable à une seule main pour être positionnable dans la position de vidange intermédiaire P1, dans la position d'écoulement P2 et dans une position repliée P3 et entre lesdites positions sans nécessiter de détacher la goulotte de vidange 8 de la partie fixe 2 du boîtier 1.

Avantageusement, dans ces configurations la goulotte de vidange 8 pivote par rapport à la partie fixe 2 pour passer dans les différentes positions sans nécessiter de détacher la goulotte de vidange 8 de la partie fixe 2 du boîtier 1 pour passer d'une position à l'autre.

Le boîtier 1 comprend la partie fixe 2 et la porte 3 qui est mobile par rapport à la partie fixe 2 et permet d'ouvrir ou de fermer le boîtier 1.

L'organe de distribution qui n'est pas représenté comprend de préférence usuellement un disque de distribution perforé entrainé en rotation de préférence par un moteur. Le disque de distribution sépare le boîtier en deux chambres, la première chambre 5 et la deuxième chambre, dans lesquelles les pressions d'air sont différentes.

La zone de réserve 7 est située dans la première chambre 5. Elle peut contenir une certaine quantité d'éléments granulaires en provenance de la trémie qui doit être vidangée et peuvent l'être grâce à la goulotte de vidange 8. La zone de réserve 7 se situe en bas de la partie fixe 2 du boîtier 1.

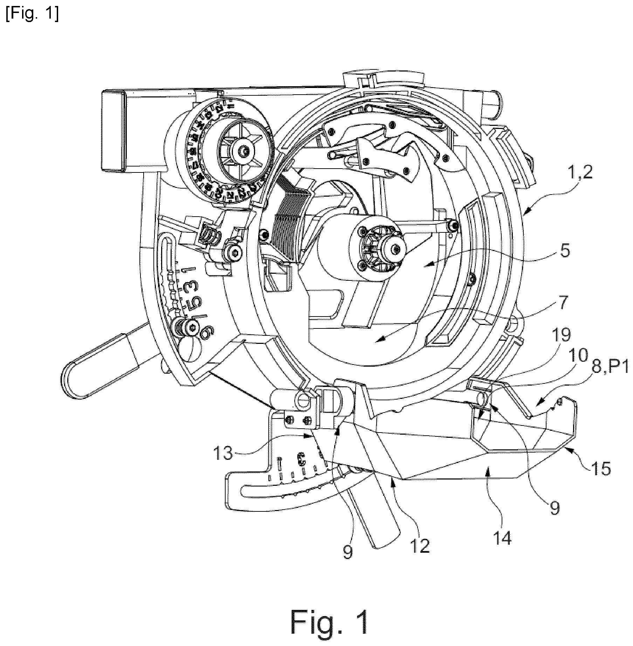

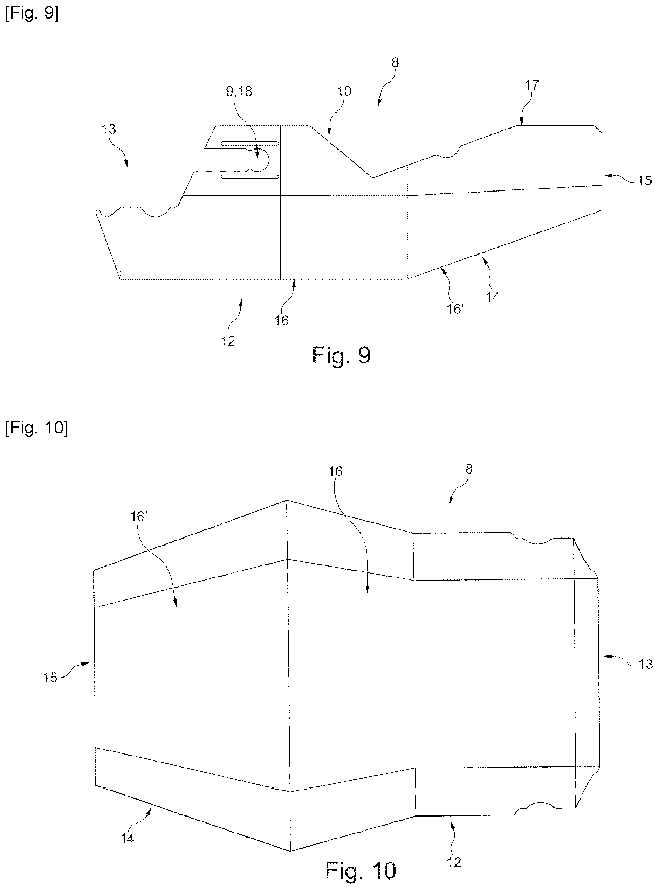

La goulotte de vidange 8 peut se présenter sous la forme d'un conduit ouvert par exemple en forme de gouttière comme l'illustrent les figures 1 à 5 et 7 à 10.

La goulotte de vidange 8 comprend de préférence deux parois latérales 17 réunies par le fond 16, 16' et présente une section sensiblement en forme de U.

La goulotte de vidange 8 est montée sur le boîtier 1 au niveau de la partie fixe 2. Elle consiste de préférence en une pièce rapportée démontable de manière amovible grâce à un ou plusieurs éléments de montage 9.

Le ou les éléments de montage 9 ont pour fonction de permettre la fixation de la goulotte de vidange 8 sur la partie fixe 2. En outre, ce ou ces éléments de montage 9 peuvent permettre un montage et un démontage de la goulotte de vidange 8 qui soit réversible pour que celle-ci puisse être détachable de la partie fixe 2. En outre, ce ou ces éléments de montage 9 peuvent également permettre la rotation de la goulotte de vidange 8 par rapport à la partie fixe 2 dans et entre lesdites positions P1, P2, P3. Ce ou ces éléments de montage 9 sont disposés de préférence sur la partie fixe 2 d'une part et sur la goulotte de vidange 8 d'autre part.

Le ou les éléments de montage 9 peut comprendre une paire de pions 19 montés sur la partie fixe 2 par des moyens de fixation 20 et une paire de fentes ou d'ouvertures ou de glissières 18 située au niveau de la première extrémité 13 dans laquelle s'engage la paire de pions 19 lorsque la goulotte de vidange 8 est montée sur la partie fixe 2.

De préférence, la paire de fentes ou d'ouvertures ou de glissières 18 est ménagée sur les parois latérales 17 au niveau de la première extrémité 13. Les glissières 18 permettent de monter/démonter aisément la goulotte de vidange 8.

La zone tampon 10 est localisée de préférence à l'intérieur de la goulotte de vidange 8 dans la position de vidange intermédiaire P1. Elle a pour fonction de permettre le stockage des éléments granulaires dans la position de vidange intermédiaire P1.

La zone de décharge 11 est située hors de la goulotte de vidange 8. La zone de décharge 11 est en contrebas de la zone tampon 10. La zone de décharge 11 peut être au niveau du sol ou au niveau d'un contenant de type sac, seau, etc. par exemple.

La deuxième extrémité 15 de la goulotte de vidange 8 est ouverte et forme une sortie 21 de laquelle peut s'écouler éléments granulaires, contrairement à la première extrémité 13 qui est fermée par une paroi 22 qui relie latéralement les deux parois latérales 17.

La goulotte de vidange 8 est dimensionnée de manière à ce que le volume maximal en éléments granulaires d'une distribution puisse approximativement être stocké dans la goulotte de vidange 8 en position de vidange intermédiaire P1.

La goulotte de vidange 8 peut comprendre un coude (non représenté) pour orienter la deuxième extrémité 15 vers l'avant ou vers l'arrière selon l'orientation de la distribution.

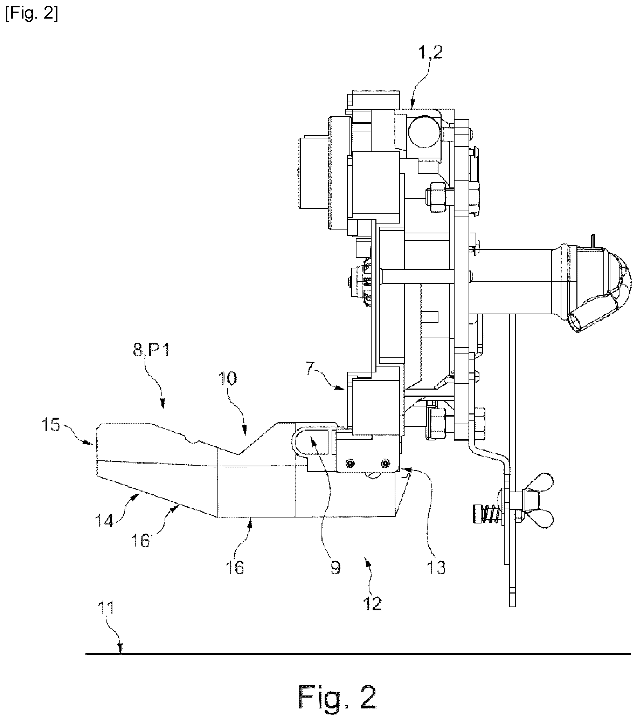

Les figures 1 et 2 montrent l'ensemble de distribution comprenant la goulotte de vidange 8 dans la position de vidange intermédiaire P1. Le boîtier 1 est dépourvu de la porte 3. Dans la partie fixe 2 du boîtier 1, la première chambre 5 peut contenir dans la zone de réserve 7 tout ou partie de la pluralité d'éléments granulaires, qui ne sont pas représentés. La goulotte de vidange 8 est disposée sous la zone de réserve 7 et peut recueillir les éléments granulaires provenant de la zone de réserve 7 dans la zone tampon 10. Le stockage de ces éléments granulaires dans la zone tampon 10 se fait sans que ces derniers ne s'écoulent directement hors de la goulotte de vidange 8. Dans cet exemple, la goulotte de vidange 8 est à l'horizontale dans la position de vidange intermédiaire P1 ce qui évite l'écoulement d'éléments granulaires vers la zone de décharge 11 qui est située en contrebas. En effet, le fond 16 de la première partie 12 est à l'horizontale et le fond 16' de la deuxième partie 14 est incliné vers le haut.

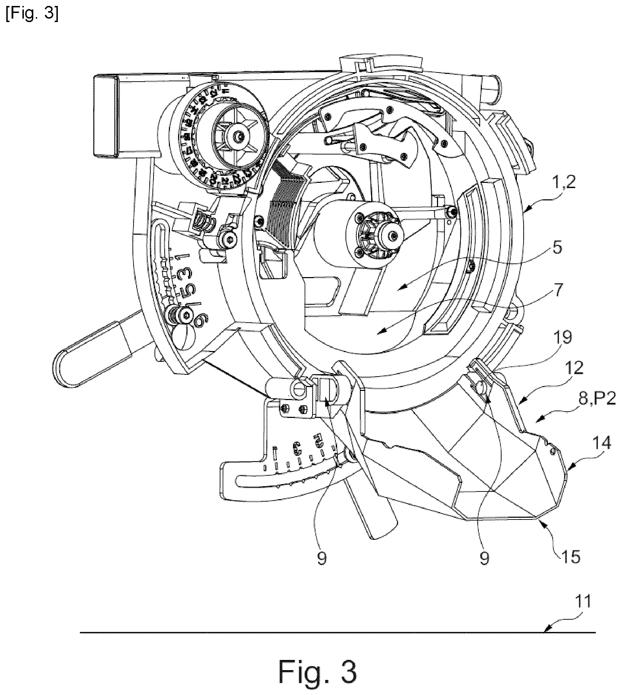

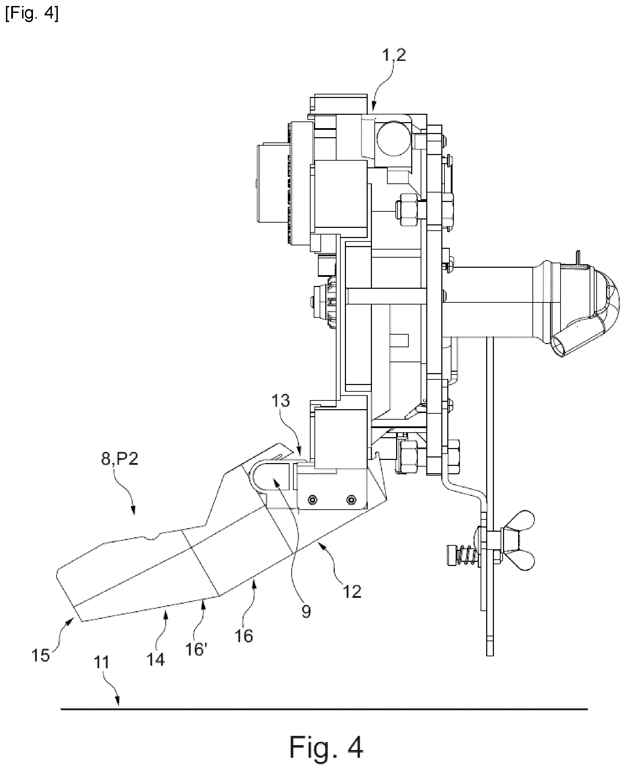

Les figures 3 et 4 montrent l'ensemble de distribution comprenant la goulotte de vidange 8 dans la position d'écoulement P2. Dans cet exemple, la goulotte de vidange 8 est inclinée vers la zone de décharge 11 dans la position d'écoulement P2 ce qui permet l'écoulement d'éléments granulaires vers la zone de décharge 11. En effet, le fond 16 de la première partie 12 et le fond 16' de la deuxième partie sont inclinés vers le bas. La deuxième extrémité libre 15 est orientée vers le bas.

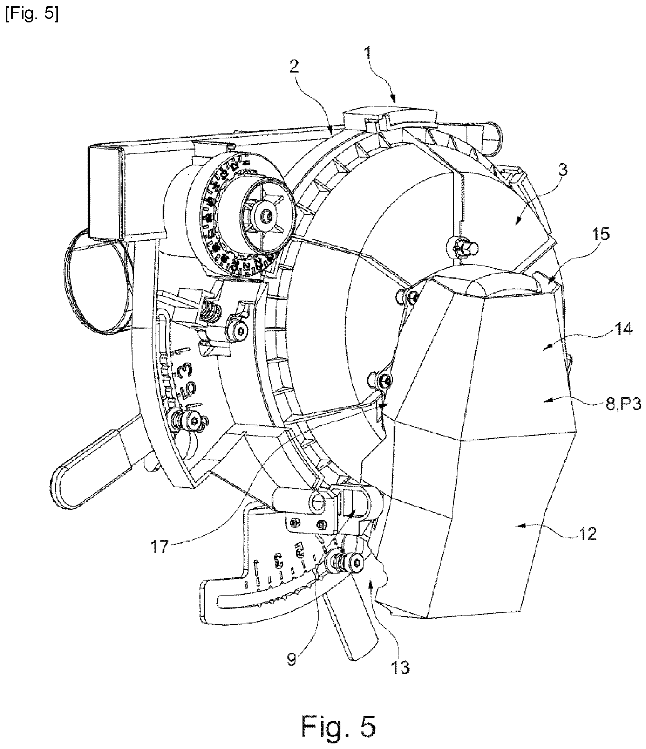

La figure 5 montre l'ensemble de distribution comprenant la goulotte de vidange 8 dans la position repliée P3. Dans cet exemple le boîtier 1 comprend la partie fixe 2 refermée par la porte 3. La goulotte de vidange 8 est disposée contre la porte 3. La deuxième extrémité libre 15 est orientée vers le haut. Les parois latérales 17 sont en regard de la porte 3.

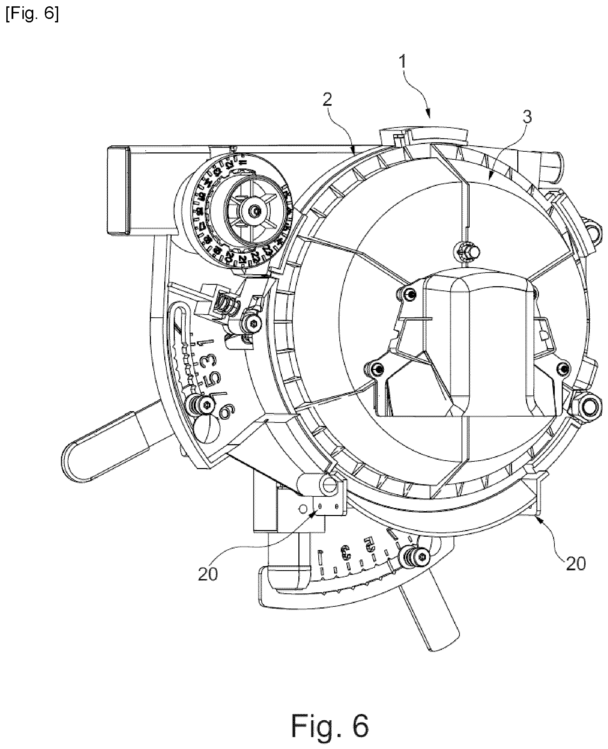

La figure 6 montre l'ensemble de distribution dépourvu de la goulotte de vidange 8. Dans cet exemple le boîtier 1 comprend la partie fixe 2 refermée par la porte 3. La partie fixe 2 comprend les moyens de fixation 20 permettant le montage d'une paire de pions 19. Les moyens de fixation 20 se présentent sous la forme de deux platines saillantes de la partie fixe 2 dans une partie inférieure située sous la zone de réserve 7 qui n'est pas visible.

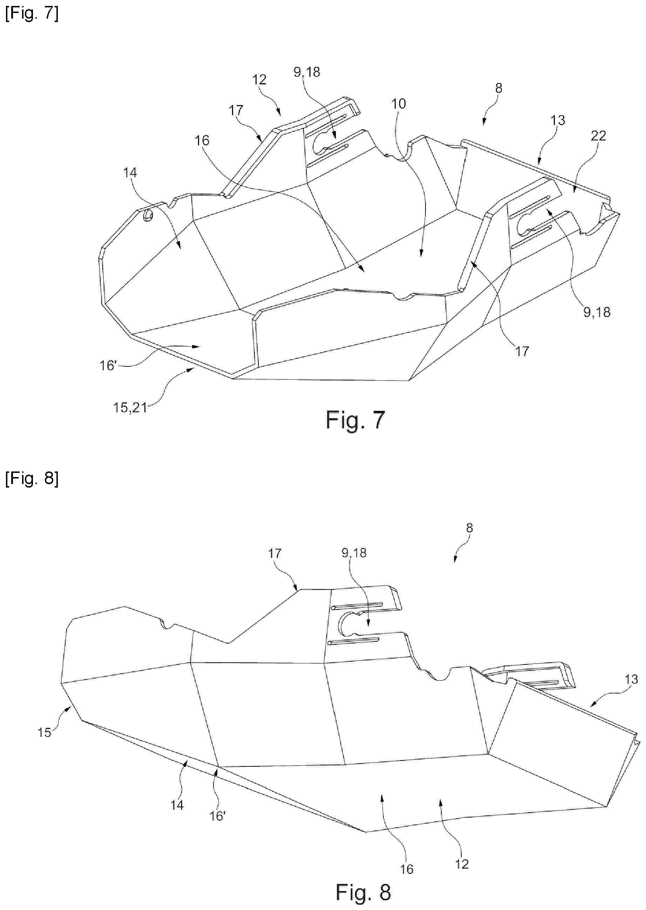

Les figures 7 à 10 illustrent la goulotte de vidange 8 illustrée dans les figures 1 à 5 selon l'invention. La goulotte de vidange 8 est une pièce rapportée et distincte du boîtier 1. Dans cet exemple, la goulotte de vidange 8 comprend la première partie 12 comprenant la première extrémité 13 et la deuxième partie 14 comprenant la deuxième extrémité 15. La goulotte de vidange 8 comprend deux parois latérales 17 réunies par le fond 16, 16' et présente une section sensiblement en forme de U. La première extrémité 13 est fermée par la paroi 22 qui relie latéralement les deux parois latérales 17. En outre, le fond 16 de la première partie 12 de la goulotte de vidange 8 est plat et le fond 16' de la deuxième partie 14 est incliné vers le haut relativement au fond 16 de la première partie 12. La première partie 12 présente une section transversale s'évasant en direction de la deuxième partie 14. La deuxième partie 14 présente une section transversale se rétrécissant en direction de la deuxième extrémité 15. Une paire de glissières 18 est ménagée sur les parois latérales 17 au niveau de la première extrémité 13. La deuxième extrémité 15 de la goulotte de vidange 8 est ouverte et forme la sortie 21.

L'invention concerne également un élément semeur qui n'est pas représenté comprenant au moins une trémie agencée pour contenir une pluralité d'éléments granulaires et étant reliée par des moyens de conduction audit ensemble de distribution, caractérisé en ce que l'ensemble de distribution est selon l'invention décrite.

L'invention concerne également un semoir qui n'est pas représenté comprenant au moins un châssis sur lequel est monté au moins un élément semeur, caractérisé en ce que le au moins un élément semeur est selon l'invention décrite.

L'invention concerne également un procédé de vidange d'un ensemble de distribution pour un semoir comprenant une pluralité d'éléments granulaires au moins dans la zone de réserve 7, caractérisé en ce que l'ensemble de distribution est selon l'invention et en ce que le procédé comprend au moins :
- une étape de préparation à la vidange, lors de laquelle la goulotte de vidange 8 est positionnée dans la position de vidange intermédiaire P1, dans laquelle la goulotte de vidange 8 permet l'écoulement de tout ou partie de la pluralité d'éléments granulaires initialement présent dans la zone de réserve 7 vers la zone tampon 10 de la goulotte de vidange 8 et permet le stockage de ces éléments granulaires dans la zone tampon 10 sans que ces derniers ne s'écoulent directement hors de la goulotte de vidange 8, la zone tampon 10 présentant une hauteur tampon inférieure à la hauteur de réserve.

Avantageusement, grâce au procédé selon l'invention, lors de l'étape de préparation à la vidange les éléments granulaires sont stockés dans la zone tampon 10 sans qu'ils ne s'écoulent directement hors de la goulotte de vidange 8 et donc vers le bas et potentiellement au sol. L'étape de vidange peut ensuite intervenir dans les meilleures conditions.

En effet, ensuite lors de l'étape de vidange, la goulotte de vidange 8 est soit détachée de sorte à vider le contenu dans un contenant ou dans la trémie, soit la goulotte de vidange 8 est positionnée dans la position d'écoulement P2 et les éléments granulaires initialement contenus dans la zone de réserve 7 ou la zone tampon 10 s'écoulent vers la zone de décharge 11 située en contrebas.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble de distribution pour un semoir comprenant au moins :
- un boîtier (1) étanche comprenant au moins une partie fixe (2) et une porte (3) mobile entre une position d'ouverture et une position de fermeture,
- un organe de distribution (4) d'une pluralité d'éléments granulaires agencé pour distribuer de façon discrète et singulière une pluralité d'éléments granulaires, l'organe de distribution (4) étant disposé à l'intérieur du boîtier (1) pour séparer l'intérieur du boîtier (1) en une première chambre (5) et une deuxième chambre, lesquelles sont distinctes, la première chambre (5) étant configurée pour recevoir tout ou partie de la pluralité d'éléments granulaires au moins dans une zone de réserve (7) et la deuxième chambre étant fermée par la porte (3) dans sa position de fermeture et étant ouverte par la porte (3) dans sa position d'ouverture,
- une goulotte de vidange (8) montée sur l'extérieur de la partie fixe (2) du boîtier (1), de préférence du côté de la deuxième chambre, par au moins un élément de montage (9),
l'ensemble de distribution est **caractérisé en ce que** la goulotte de vidange (8) est configurée pour être positionnable dans une position de vidange intermédiaire (P1), dans laquelle la goulotte de vidange (8) est configurée pour permettre l'écoulement de tout ou partie de la pluralité d'éléments granulaires initialement présent dans la zone de réserve (7) vers une zone tampon (10) de la goulotte de vidange (8) et pour permettre le stockage de ces éléments granulaires dans la zone tampon (10) sans que ces derniers ne s'écoulent directement hors de la goulotte de vidange (8), la zone tampon (10) présentant une hauteur tampon inférieure à la hauteur de réserve.

2. Ensemble de distribution selon la revendication 1, **caractérisé en ce qu'**au moins dans la position de vidange intermédiaire la goulotte de vidange (8) est montée amovible de la partie fixe (2) du boîtier (1) par le au moins un élément de montage (9) de préférence manœuvrable à une seule main de sorte à être détachable de la partie fixe (2) du boîtier (1).

3. Ensemble de distribution selon l'une quelconque des revendications 1 à 2, **caractérisé en ce que** la goulotte de vidange (8) est positionnable dans une position d'écoulement (P2), configurée pour permettre l'écoulement, vers une zone de décharge (11) de hauteur de décharge inférieure relativement à la hauteur tampon, de tout ou partie de la pluralité d'éléments granulaires initialement présent dans la zone de réserve (7) ou la zone tampon (10), la zone de décharge (11) étant située hors de la goulotte de vidange (8).

4. Ensemble de distribution selon l'une quelconque des revendications 1 à 3, **caractérisé en ce que** dans la position de vidange intermédiaire (P1) la goulotte de vidange (8) est horizontale ou inclinée d'un angle d'inclinaison dit intermédiaire empêchant l'écoulement d'élément(s) granulaire(s) hors de la goulotte de vidange (8).

5. Ensemble de distribution selon les revendications 3 et 4, **caractérisé en ce que** dans la position d'écoulement (P2) la goulotte de vidange (8) est inclinée d'un angle d'inclinaison dit d'écoulement permettant l'écoulement d'élément(s) granulaire(s) qui est supérieur à l'angle d'inclinaison dit intermédiaire.

6. Ensemble de distribution selon l'une quelconque des revendications 1 à 5, **caractérisé en ce que** la goulotte de vidange (8) comprend une première partie (12) et une deuxième partie (14) comprenant une deuxième extrémité (15) libre de la goulotte de vidange (8), la deuxième partie (14) présente une géométrie agencée pour empêcher l'écoulement en dehors de la goulotte de vidange (8) dans la position de vidange intermédiaire (P1).

7. Ensemble de distribution selon la revendication 6, **caractérisé en ce que** le fond (16) de la première partie (12) de la goulotte de vidange (8) est plat et **en ce que** le fond (16') de la deuxième partie (14) est incliné vers le haut relativement au fond (16) de la première partie (12).

8. Ensemble de distribution selon l'une quelconque des revendications 6 à 7, **caractérisé en ce que** la deuxième partie (14) présente une section transversale se rétrécissant en direction de la deuxième extrémité (15).

9. Ensemble de distribution selon l'une quelconque des revendications 3 à 8, **caractérisé en ce que** la goulotte de vidange (8) est montée mobile de préférence en rotation par le au moins un élément de montage (9) de préférence manœuvrable à une seule main pour être positionnable dans la position de vidange intermédiaire (P1), dans la position d'écoulement (P2) et entre lesdites positions sans nécessiter de détacher la goulotte de vidange (8) de la partie fixe (2) du boîtier (1).

10. Elément semeur comprenant au moins une trémie agencée pour contenir une pluralité d'éléments granulaires et un ensemble de distribution, la trémie étant reliée par des moyens de conduction à l'ensemble de distribution, **caractérisé en ce que** l'ensemble de distribution est selon l'une quelconque des revendications 1 à 9.

11. Semoir comprenant au moins un châssis sur lequel est monté au moins un élément semeur, **caractérisé en ce que** le au moins un élément semeur est selon la revendication 10.

12. Procédé de vidange d'un ensemble de distribution pour un semoir comprenant une pluralité d'éléments granulaires au moins dans la zone de réserve (7), **caractérisé en ce que** l'ensemble de distribution est selon l'une quelconque des revendications 1 à 9 et **en ce que** le procédé comprend au moins :
- une étape de préparation à la vidange, lors de laquelle la goulotte de vidange (8) est positionnée dans la position de vidange intermédiaire (P1), dans laquelle la goulotte de vidange (8) permet l'écoulement de tout ou partie de la pluralité d'éléments granulaires initialement présent dans la zone de réserve (7) vers la zone tampon (10) de la goulotte de vidange (8) et permet le stockage de ces éléments granulaires dans la zone tampon (10) sans que ces derniers ne s'écoulent directement hors de la goulotte de vidange (8), la zone tampon (10) présentant une hauteur tampon inférieure à la hauteur de réserve.

## Patentansprüche

1. Verteilerbaugruppe für eine Sämaschine, die mindestens Folgendes umfasst:
- ein dichtes Gehäuse (1), das mindestens einen festen Teil (2) und eine Klappe (3) umfasst, die zwischen einer Öffnungsposition und einer Schließposition beweglich ist,
- ein Verteilerorgan (4) für eine Vielzahl von körnigen Elementen, das so ausgelegt ist, dass es eine Vielzahl von körnigen Elementen diskret und einzeln verteilt,
wobei das Verteilerorgan (4) im Inneren des Gehäuses (1) angeordnet ist, um das Innere des Gehäuses (1) in eine erste Kammer (5) und eine zweite Kammer zu unterteilen, die voneinander getrennt sind, wobei die erste Kammer (5) so ausgebildet ist, dass sie die Vielzahl an körnigen Elementen ganz oder teilweise zumindest in einem Vorratsbereich (7) aufnimmt, und die zweite Kammer durch die Klappe (3) in ihrer Schließposition verschlossen und durch die Klappe (3) in ihrer Öffnungsposition geöffnet ist,
- eine Entleerungsrinne (8), die an der Außenseite des festen Teils (2) des Gehäuses (1), vorzugsweise auf der Seite der zweiten Kammer, mittels mindestens eines Befestigungselements (9) angebracht ist,
die Verteilerbaugruppe ist **dadurch gekennzeichnet, dass** die Entleerungsrinne (8) so ausgebildet ist, dass sie in eine Zwischenentleerungsposition (P1) gebracht werden kann, in der die Entleerungsrinne (8) so ausgelegt ist, dass sie das Abfließen aller oder eines Teils der ursprünglich im Vorratsbereich (7) vorhandenen körnigen Elemente in einen Pufferbereich (10) der Entleerungsrinne (8) ermöglicht und die Lagerung dieser körnigen Elemente im Pufferbereich (10) ermöglicht, ohne dass diese direkt aus der Entleerungsrinne (8) herausfließen, wobei der Pufferbereich (10) eine Pufferhöhe aufweist, die geringer ist als die Vorratshöhe.

2. Verteilerbaugruppe nach Anspruch 1, **dadurch gekennzeichnet, dass** zumindest in der Zwischenentleerungsposition die Entleerungsrinne (8) mittels des mindestens einen, vorzugsweise mit einer Hand betätigbaren Befestigungselements (9) lösbar an dem festen Teil (2) des Gehäuses (1) angebracht ist, sodass sie von dem festen Teil (2) des Gehäuses (1) abgenommen werden kann.

3. Verteilerbaugruppe nach einem der Ansprüche 1 bis 2, **dadurch gekennzeichnet, dass** die Entleerungsrinne (8) in eine Abflussposition (P2) gebracht werden kann, die so ausgelegt ist, dass sie den Abfluss in einen Abgabebereich (11) mit einer im Vergleich zur Pufferhöhe geringeren Abgabehöhe, von allen oder einem Teil der Vielzahl an körnigen Elementen, die ursprünglich im Vorratsbereich (7) oder im Pufferbereich (10) vorhanden waren, wobei sich der Abgabebereich (11) außerhalb der Entleerungsrinne (8) befindet.

4. Verteilerbaugruppe nach einem der Ansprüche 1 bis 3, **dadurch gekennzeichnet, dass** in der Zwischenentleerungsposition (P1) die Entleerungsrinne (8) horizontal verläuft oder um einen sogenannten Zwischenneigungswinkel geneigt ist, der das Herausfließen von körnigen Elementen aus der Entleerungsrinne (8) verhindert.

5. Verteilerbaugruppe nach den Ansprüchen 3 und 4, **dadurch gekennzeichnet, dass** die Entleerungsrinne (8) in der Abflussposition (P2) um einen sogenannten Abflussneigungswinkel geneigt ist, der den Abfluss von körnigen Elementen ermöglicht und größer ist als der sogenannte Zwischenneigungswinkel.

6. Verteilerbaugruppe nach einem der Ansprüche 1 bis 5, **dadurch gekennzeichnet, dass** die Entleerungsrinne (8) einen ersten Abschnitt (12) und einen zweiten Abschnitt (14) mit einem freien zweiten Ende (15) der Entleerungsrinne (8) umfasst, wobei der zweite Abschnitt (14) eine Geometrie aufweist, die so ausgelegt ist, dass in der Zwischenentleerungsposition (P1) der Abfluss aus der Entleerungsrinne (8) verhindert wird.

7. Verteilerbaugruppe nach Anspruch 6, **dadurch gekennzeichnet, dass** der Boden (16) des ersten Abschnitts (12) der Entleerungsrinne (8) flach ist und dass der Boden (16') des zweiten Abschnitts (14) relativ zum Boden (16) des ersten Abschnitts (12) nach oben geneigt ist.

8. Verteilerbaugruppe nach einem der Ansprüche 6 bis 7, **dadurch gekennzeichnet, dass** der zweite Abschnitt (14) einen Querschnitt aufweist, der sich in Richtung des zweiten Endes (15) verjüngt.

9. Verteilerbaugruppe nach einem der Ansprüche 3 bis 8, **dadurch gekennzeichnet, dass** die Entleerungsrinne (8) durch das mindestens eine, vorzugsweise einhändig bedienbare Befestigungselement (9) beweglich, vorzugsweise drehbar, so angebracht ist, dass sie in die Zwischenentleerungsposition (P1), in die Abflussposition (P2) sowie zwischen diesen Positionen positioniert werden kann, ohne dass die Entleerungsrinne (8) vom festen Teil (2) des Gehäuses (1) gelöst werden muss.

10. Säelement, umfassend mindestens einen Behälter, der zur Aufnahme einer Vielzahl von körnigen Elementen ausgelegt ist, und eine Verteilerbaugruppe, wobei der Behälter über Leitungsmittel mit der Verteilerbaugruppe verbunden ist, **dadurch gekennzeichnet, dass** die Verteilerbaugruppe nach einem der Ansprüche 1 bis 9 ausgebildet ist.

11. Sämaschine mit mindestens einem Rahmen, an dem mindestens ein Säelement angebracht ist, **dadurch gekennzeichnet, dass** das mindestens eine Säelement nach Anspruch 10 ausgebildet ist.

12. Verfahren zum Entleeren einer Verteilerbaugruppe für eine Sämaschine, die zumindest im Vorratsbereich (7) eine Vielzahl von körnigen Elementen umfasst, **dadurch gekennzeichnet, dass** die Verteilerbaugruppe nach einem der Ansprüche 1 bis 9 ausgebildet ist und dass das Verfahren mindestens Folgendes umfasst:
- einen Vorbereitungsschritt für die Entleerung, bei dem die Entleerungsrinne (8) in die Zwischenentleerungsposition (P1) gebracht wird, in der die Entleerungsrinne (8) das Abfließen aller oder eines Teils der ursprünglich im Vorratsbereich (7) vorhandenen körnigen Elemente in den Pufferbereich (10) der Entleerungsrinne (8) ermöglicht und die Lagerung dieser körnigen Elemente im Pufferbereich (10) ermöglicht, ohne dass diese direkt aus der Entleerungsrinne (8) abfließen, wobei der Pufferbereich (10) eine Pufferhöhe aufweist, die geringer ist als die Vorratshöhe.

## Claims

1. Distribution assembly for a seed drill comprising at least:
- an airtight casing (1) comprising at least a fixed part (2) and a door (3) that can be moved between an open position and a closed position,
- a distribution element (4) for a plurality of granular elements, arranged for discrete and singular distribution of a plurality of granular elements,
the distribution element (4) being placed inside the casing (1) to separate the interior of the casing (1) into a first chamber (5) and a second chamber, which are different, the first chamber (5) being configured to receive all or part of the plurality of granular elements at least in a reserve zone (7), and the second chamber being closed with the door (3) in its closed position and being opened by the door (3) in its open position,
- a drain chute (8) mounted on the outside of the fixed part (2) of the casing (1), preferably on the side of the second chamber, by at least one assembly element (9),
the distribution assembly is **characterised in that** the drain chute (8) is configured so that it can be positioned in an intermediate drain position (P1), in which the drain chute (8) is configured to allow the flow of all or part of the plurality of granular elements initially present in the reserve zone (7) towards a buffer zone (10) of the drain chute (8) and to allow the storage of said granular elements in the buffer zone (10) without them flowing directly out of the drain chute (8), the buffer zone (10) having a buffer height less than the reserve height.

2. Distribution assembly according to claim 1, **characterised in that** at least in the intermediate drain position (P1), the drain chute (8) is removably mounted from the fixed part (2) of the casing (1) by the at least one assembly element (9), preferably manoeuvrable with just one hand so as to be detachable from the fixed part (2) of the casing (1).

3. Distribution assembly according to any one of claims 1 to 2, **characterised in that** the drain chute (8) can be positioned in an outflow position (P2), configured to allow the flow, towards a discharge zone (11) of a lower discharge height relative to the buffer height, of all or part of the plurality of granular elements initially present in the reserve zone (7) or the buffer zone (10), the discharge zone (11) being located outside of the drain chute (8).

4. Distribution assembly according to any one of claims 1 to 3, **characterised in that** in the intermediate drain position (P1), the drain chute (8) is horizontal or tilted by what is known as an intermediate angle of inclination, preventing the flow of granular element(s) out of the drain chute (8).

5. Distribution assembly according to claims 3 and 4, **characterised in that** in the outflow position (P2), the drain chute (8) is tilted by what is known as a flow angle of inclination, allowing the flow of granular element(s), which is greater than the angle of inclination known as intermediate angle of inclination.

6. Distribution assembly according to any one of claims 1 to 5, **characterised in that** the drain chute (8) comprises a first part (12) and a second part (14) comprising a second free end (15) of the drain chute (8), with the geometry of the second part (14) arranged to prevent the flow out of the drain chute (8) in the intermediate drain position (P1).

7. Distribution assembly according to claim 6, **characterised in that** the bottom (16) of the first part (12) of the drain chute (8) is flat and the bottom (16') of the second part (14) is tilted upwards relative to the bottom (16) of the first part (12).

8. Distribution assembly according to any one of claims 6 to 7, **characterised in that** the second part (14) has a transverse cross-section narrowing towards the second end (15).

9. Distribution assembly according to any one of claims 3 to 8, **characterized in that** the drain chute (8) is mounted so as to be mobile, preferably in rotation by the at least one assembly element (9), which can preferably be manoeuvred with just one hand, to be positioned in the intermediate drain position (P1), in the outflow position (P2), and between said positions, without requiring the drain chute (8) to be detached from the fixed part (2) of the casing (1).

10. Seeder element comprising at least one hopper arranged to contain a plurality of granular elements and a distribution assembly, the hopper being connected by conveying means to the distribution assembly, **characterised in that** the distribution assembly is in accordance with any one of claims 1 to 9.

11. Seed drill comprising at least one chassis on which at least one seeder element is mounted, **characterised in that** the at least one seeder element is in accordance with claim 10.

12. Drain method for a distribution assembly for a seed drill comprising a plurality of granular elements at least in the reserve zone (7), **characterised in that** the distribution assembly is in accordance with any one of claims 1 to 9, and **in that** the method comprises at least:
- a step to prepare for draining, during which the drain chute (8) is positioned in an intermediate drain position (P1), in which the drain chute (8) allows the flow of all or part of the plurality of granular elements initially present in the reserve zone (7) towards the buffer zone (10) of the drain chute (8) and allows the storage of said granular elements in the buffer zone (10) without them flowing directly out of the drain chute (8), the buffer zone (10) having a buffer height less than the reserve height.
